(19) Europäisches Patentamt
European Patent Office
Office européen des brevets

(11) **EP 4 018 516 B1**

(12) **EUROPEAN PATENT SPECIFICATION**

(45) Date of publication and mention
of the grant of the patent:
**04.12.2024 Bulletin 2024/49**

(21) Application number: **20853710.0**

(22) Date of filing: **18.08.2020**

(51) International Patent Classification (IPC):
**H01S 3/067** (2006.01)    **H04B 10/294** (2013.01)
**H01S 3/16** (2006.01)    **H01S 3/00** (2006.01)

(52) Cooperative Patent Classification (CPC):
**H01S 3/06754; H01S 3/0675; H04B 10/2941;**
H01S 3/0064; H01S 3/06766; H01S 3/1608;
H01S 2301/04

(86) International application number:
**PCT/US2020/046805**

(87) International publication number:
**WO 2021/034830 (25.02.2021 Gazette 2021/08)**

(54) **OPTICAL FIBER AMPLIFIER WITH DISTRIBUTED GAIN FLATTENING**

FASEROPTISCHER VERSTÄRKER MIT VERTEILTER VERSTÄRKUNGSGLÄTTUNG

AMPLIFICATEUR À FIBRE OPTIQUE À ÉGALISATEUR DE GAIN DISTRIBUÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.08.2019 US 201962889819 P**

(43) Date of publication of application:
**29.06.2022 Bulletin 2022/26**

(73) Proprietor: OFS Fitel, LLC
**Norcross, GA 30071 (US)**

(72) Inventors:
• **DIGIOVANNI, David, J.**
**Mountain Lakes, NJ 07046 (US)**
• **WESTBROOK, Paul, S.**
**Bridgewater, NJ 08807 (US)**
• **ZHU, Benyuan**
**Princeton, NJ 08540 (US)**

(74) Representative: **Stöckeler, Ferdinand**
**Schoppe, Zimmermann, Stöckeler
Zinkler, Schenk & Partner mbB
Patentanwälte
Radlkoferstrasse 2
81373 München (DE)**

(56) References cited:
**EP-A1- 0 897 124    EP-A1- 1 150 403
JP-A- 2001 203 415    US-A- 5 260 823
US-A- 5 271 024    US-A- 5 337 382
US-A- 5 430 817    US-A- 6 141 142
US-A1- 2002 081 086    US-A1- 2002 105 720
US-A1- 2005 191 007    US-B1- 6 320 693
US-B1- 6 392 789**

• **SINGH RASHMI ET AL: "Gain flattening by long
period gratings in erbium doped fibers", OPTICS
COMMUNICATIONS, ELSEVIER, AMSTERDAM,
NL, vol. 240, no. 1, 14 July 2004 (2004-07-14),
pages 123 - 132, XP029613774, ISSN: 0030-4018,
DOI: 10.1016/J.OPTCOM.2004.06.023**

## Description

### Cross-Reference to Related Applications

This application claims the benefit of US Provisional Application No. 62/889,819, filed August 21, 2019.

### Technical Field

The present invention is directed to optical fiber amplifiers and, more particularly, to the utilization of distributed filtering within the amplifying medium itself to minimize variations in gain across the operating bandwidth of the amplifier.

### Background of the Invention

A typical erbium-doped fiber amplifier (EDFA) exhibits variations in the amount of gain generated as a function of signal wavelength and requires the use of a gain-flattening filter (GFF) in the signal path beyond the amplifier output to provide the desired uniform gain profile. In principle, a GFF functions to reduce gain peaks at various wavelengths and, as a result, the output power provided by the amplifier is also reduced. There are many applications where this reduction in output power is problematic, particularly long-haul communication systems (for example, submarine cable systems) where the electrical power used to operate the amplifier pump sources is fed from a terminal station with a maximum DC voltage rating.

Each of SINGH RASHMI ET AL: "Gain flattening by long period gratings in erbium doped fibers",OPTICS COMMUNICATIONS, ELSEVIER, AMSTERDAM, NL, vol. 240, no. 1, 14 July 2004 (2004-07-14), pages 123-132, XP029613774;

EP 0 897 124 A1; EP 1 150 403 A1; US 5 260 823 A; US 5 337 382 A; US 6 141 142 A; JP 2001 203415 A; US 6 392 789 B1; and US 2002/105720 A1 discloses a gain flattening grating filter structure within (or between discrete sections of) an Er-doped gain fiber.

US 2005/191007 A1 discloses a gain flattening filter comprising a plurality of distributed long-period gratings, LPGs, appended to the output of an erbium doped fiber amplifier gain fiber.

### Summary of the Invention

The needs remaining in the prior art are addressed by the present invention, which relates to optical fiber amplifiers and, more particularly, to the utilization of distributed spectral filtering within the amplifying fiber itself to control variations in gain across the operating bandwidth of the amplifier.

It is contemplated that the utilization of distributed filtering during the amplification process is an improvement over the prior art use of a discrete GFF at the output of the amplifier, since the inclusion of distributed filtering with the amplifying process inhibits the growth of those wavelength regions within the spectrum that are more responsive to the presence of the pump light. Thus, rather than allowing the gain to increase unchecked during amplification, only to be stripped out by a discrete GFF positioned at the output of the amplifier, the distributed filtering of the present invention provides an efficient way to create a more uniform gain profile in the first instance.

While in many applications the type of "distributed spectral filtering" provided by the present invention is used to create an essentially uniform gain profile at the output of the fiber amplifier, it is to be understood that the inventive concept of distributed spectral filtering within a doped fiber amplifier may also be used to create other types of responses at the output of the amplifier. For example, the distributed spectral filtering may be configured to create a specific non-uniform gain profile that is suitable for use in a particular application. Alternatively, the distributed spectral filtering may be configured to extend the bandwidth of a given amplifier (without, perhaps, attempting to maintain a uniform gain profile). Thus, while various portions of the following discussion specifically refer to using distributed spectral filtering within a rare earth-doped gain fiber to perform "gain flattening filtering", it is to be understood that this is exemplary only and used as a means to describe the invention as a whole.

The present invention is defined in independent claim 1. Preferred embodiments of the invention are set out in the dependent claims. In accordance with the principles of the present invention, a grating structure is inscribed within the rare earth-doped gain fiber itself, with the grating formed to extend along a at least a majority portion of the gain fiber. The grating structure may be of any suitable arrangement that provides the desired loss spectrum, for example, similar to the profile of a prior art discrete GFF.

Various types of grating structures that may be used to provide distributed wavelength-dependent filtering along the rare earth-doped gain fiber include, but are not limited to, tilted gratings, weak Bragg gratings, long-period gratings (LPGs), and any suitable combination of these grating structures. Repeated sections of the grating formed along the length of the gain fiber may exhibit the same loss profile, or may be configured to provide different levels of attenuation at different wavelengths. The grating structure may be formed within the gain fiber as it is being drawn, or inscribed within an as-formed fiber. The process of writing the grating structure may be monitored and the features of the grating adjusted as need be to provide the desired loss spectrum.

One application for a fiber amplifier of the present invention is long-haul transmission systems that have limitations on the electrical power required to energize the pump sources within the amplifiers (repeaters) installed along the span of the transmission line. By eliminating the need for GFFs, the inventive fiber amplifier using distributed filtering allows for improved "power conversion efficiency" (PCE), which adds signal capacity (in terms of additional fiber pairs, perhaps) to a long-haul system.

In an exemplary arrangement of a long-haul application, it is contemplated that a few, small-power GFFs may be included at selected locations along the span to minimize ripple in the gain profile. Alternatively, a "specialized" grating structure may be formed within a subset of amplifiers to similarly address this gain ripple.

An exemplary embodiment of the present invention may take the form of a rare-earth doped optical fiber amplifier for providing optical signal amplification over a defined bandwidth of operation. The rare-earth doped optical fiber amplifier comprises a section of rare-earth doped optical fiber and a source for providing a pump beam input. The section of rare-earth doped optical fiber is formed to include a grating structure incorporated along at least a majority of its longitudinal extent. The pump beam operates at a wavelength appropriate for creating gain in an optical signal propagating through the section of rare-earth doped optical fiber, and the grating structure incorporated within the section of rare-earth doped optical fiber is configured to provide distributed spectral filtering within the defined bandwidth of operation of the rare-earth doped optical fiber amplifier.

Other and further aspects and advantages of the present invention will become apparent during the course of the following discussion and by reference to the accompanying drawings.

### Brief Description of the Drawings

Referring now to the drawings, where like numerals represent like parts in several views:

FIG. 1 contains a diagram of an exemplary EDFA configured to provide distributed spectral filtering along the rare earth-doped gain fiber of the amplifying region;

FIG. 2 is a plot of a typical gain variation as a function of wavelength for a conventional prior art EDFA;

FIG. 3 illustrates a loss spectrum of an exemplary grating structure that may be incorporated within a doped gain fiber to provide distributed spectral filtering in accordance with the present invention;

FIG. 4 contains plots comparing the performance of a prior art EDFA using a gain-flattening filter (GFF) and a distributed spectral filtering EDFA formed in accordance with the present invention;

FIG. 5 contains bar graphs showing the improvement in transmission capacity for exemplary submarine cable systems using distributed spectral filtering EDFAs in accordance with the present invention;

FIG. 6 contains bar graphs showing an increase in the number of fiber pairs included within exemplary submarine cable systems using distributed spectral filtering EDFAs in accordance with the present invention;

FIG. 7 contains plots of both total cable capacity and number of fiber pairs supported by an exemplary transatlantic submarine cable system; and

FIG. 8 contains plots of both total cable capacity and number of fiber pairs supported by an exemplary transpacific submarine cable system.

### Detailed Description

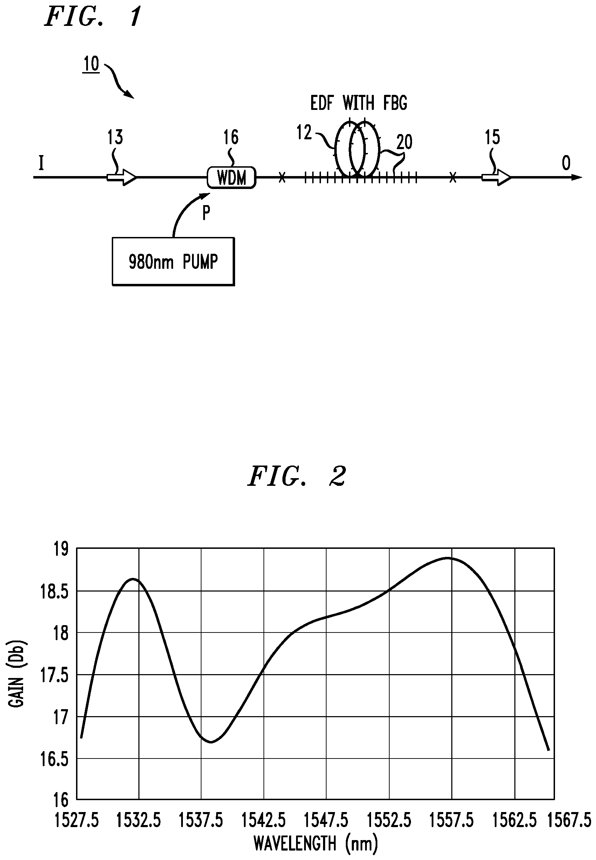

FIG. 1 is a diagram of an exemplary erbium-doped fiber amplifier (EDFA) 10 formed in accordance with the present invention to provide distributed spectral filtering of a propagating optical input signal during the amplifying process itself, instead of relying on the use of a post-amplification discrete device (e.g., a gain-flattening filter (GFF)), as found in the prior art. While the following discussion is directed to erbium-doped fiber amplifiers (EDFAs) for the sake of example, the principles of distributed filtering may be used with any type of rare earth-doped fiber amplifiers to address the problems with non-uniform gain profiles.

EDFA 10 is shown as comprising a section of Er-doped gain fiber 12 which has been modified from a conventional gain fiber to incorporate a grating structure 20. As will be discussed in detail below, grating structure 20 is formed along at least a majority of gain fiber 12 and functions to perform wavelength-dependent filtering (i.e., "spectral filtering) of the propagating optical signal as it is being amplified. That is, grating structure 20 is used to attenuate the gain in certain wavelength regions so that the EDFA exhibits the desired response. The desired amplifier response may be an increase in operating bandwidth (that is, providing sufficient gain at one or both of the short wavelength end and/or long wavelength end of the spectrum of interest), without any particular concern of the gain profile (uniformity, for example) of the extended bandwidth. Alternatively, the desired amplifier response may be to achieve a defined gain profile across the bandwidth of the amplifier. As will be discussed in detail below, many applications require the use of a fiber amplifier that exhibits an essentially uniform gain profile across the bandwidth of interest.

Grating structure 20 is formed to extend along at least a majority of the gain fiber and along an output termination section of the gain fiber to minimize the opportunity for additional gain variations to be generated within the amplified optical signal immediately before it exits the gain fiber.

In typical fashion, EDFA 10 is used to amplify an input optical signal I, where this input signal is first passed through an input isolator 13 before being introduced into Er-doped gain fiber 12. The configuration shown in FIG. 1 is a forward-pumped fiber amplifier, with a pump beam P operating at an appropriate pump wavelength (for example, 980 nm when used with Er-doped gain fiber) also coupled into the input of gain fiber 12. A wavelength division multiplexer (WDM) 16 is shown as positioned at the input to gain fiber 12, and used to combine the propagating input signal I and pump beam P from a pump source 18, coupling both into gain fiber 12. Subsequent to amplification, the amplified signal passes through an output isolator 15 and exits EDFA 10 as amplified output optical signal O.

FIG. 2 contains a plot of a typical variation in gain as a function of wavelength for a conventional EDFA used to amplify signals operating within a particular wavelength range of about 1527 nm to 1567 nm (this particular range being one example of a C-band 1550 nm spectral region). The gain is shown as varying by as much as about 2.3 dB over this range, and for this reason discrete gain-flattening filters (GFF) have been used in the prior art to attenuate at least the peak regions of the gain profile to somewhat flatten the performance of the EDFA over the 1550 nm spectral region. As mentioned above and discussed in detail below, the need for GFFs reduces the power conversion efficiency (PCE) of EDFAs, which is problematic in systems with a limited power budget (such as long-haul transmission systems).

The inclusion of grating structure 20 within Er-doped gain fiber 12 of the inventive EDFA 10 allows for the propagating optical signal to be filtered at the same time that amplification is taking place so that the variations shown in FIG. 2 are minimized in the first instance. Said another way, the inclusion of grating structure 20 within gain fiber 12 inhibits the un-checked growth of gain at certain wavelength values by introducing attenuation of these signal components as the signal continues to propagate along (and be amplified within) Er-doped gain fiber 12. By virtue of the ability to attenuate certain wavelength components as the signal propagates along the gain fiber, more efficient and uniform amplification across the entire spectrum may be provided, with the output from EDFA 10 being, in this example, an essentially uniform gain profile (alternatively, the attenuation may be controlled to extend the amplifier's bandwidth or provide an alternative gain profile as best-suited for a specific application).

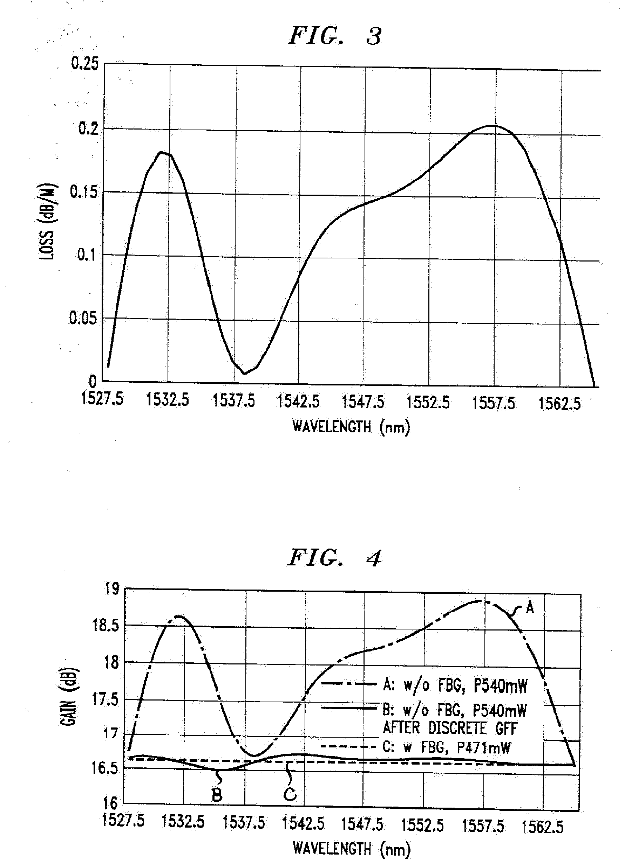

FIG. 3 illustrates a loss spectrum of an exemplary grating structure 20 that may be incorporated in Er-doped gain fiber 12. The particular shape of this plot may be similar to that of a GFF of the prior art, but in this instance is repeated along an extended portion of gain fiber 12 to provide the desired distributed filtering capability over a relatively long extent of gain fiber 12. The distributed nature of the inventive arrangement is depicted in FIG. 3 by the indication along the ordinate axis of the loss as dB/m (where a given section of gain fiber may have a length of tens of meters). This continuous type of filtering is in contrast to a "prior art" GFF that needs to be configured to strip out large amounts of gain in certain wavelength regions.

FIG. 4 contains plots of signal gain as a function of wavelength for two different prior art EDFAs, as well as an exemplary EDFA 10 formed in accordance with the present invention. For the sake of comparison, the "unfiltered" gain profile of FIG. 2 is reproduced as Plot A in FIG. 4. Plot B is also associated with a conventional EDFA, but in this case includes a discrete gain-flattening filter disposed beyond the output of the gain fiber. The improvement in response is dramatic, but comes at the expense of a reduced PCE, which is problematic for long-span applications with fixed power budgets. Plot C shows the results of using grating structure 20 integrated within Er-doped gain fiber 20, in accordance with the principles of the present invention. The result of this distributed filtering approach is also a significant improvement over a system without any type of GFF, and does not incur the same PCE penalty as the prior art discrete filter approach. In particular, the PCE for a prior art arrangement using the discrete GFF was found to be about 34.04%, while the PCE for the inventive configuration of distributed filtering along the gain fiber was found to be about 39.45%. As will be discussed in detail below, this increase in PCE allows for additional "fiber pairs" to be used in selected systems (such as submarine cable systems).

One type of grating that may be used to form grating structure 20 is a tilted grating. In a tilted grating, the planes of the grating modulation are at an angle with respect to the axis of the fiber (here, the axis of Er-doped gain fiber 12). Such a grating scatters light into cladding modes of the gain fiber, giving rise to attenuation of the signal. Wavelength-dependent attenuation may be configured by overlapping several tilted gratings with different periods. A typical tilt angle could be in the range between 0° and 9°.

Alternatively, grating structure 20 may comprise a weak Bragg grating that functions to reflect light back into the core region of gain fiber 12. In order to adjust the strength of such a grating, the refractive index modulation and/or the local period of grating structure 20 may be changed. The overall structure of this type of grating thus enables attenuation of selected wavelength components.

Besides the use of tilted gratings and weak Bragg gratings, grating structure 20 may comprise a set of long-period gratings (LPGs), where wavelength-dependent filtering is achieved by including several LPGs of different grating periods.

In one embodiment, Er-doped gain fiber 12 of EDFA 10 may be configured to support an $LP_{01}$ core mode and a guided $LP_{11}$ mode. Grating structure 20 may comprise a tilted grating where the tilt of the grating planes is adjusted so that the back reflection of the $LP_{01}$ core mode is very low, while the coupling between the forward-propagating $LP_{01}$ core mode and the backward-propagating $LP_{11}$ mode is very large. The grating period and strength of such a multi-mode grating structure 20 is adjusted, as discussed above, to produce the required attenuation at the wavelengths where excessive levels of gain are produced. In another version of this embodiment, the refractive index of gain fiber 12 is designed to increase the coupling to a given cladding mode, typically the $LP_{11}$ mode. In this case, the coupling to such a ghost mode is used to produce the desired attenuation. In either of these embodiments, the back-reflected LP$_{11}$ or ghost mode light exhibits a relatively large attenuation at the splice leading to gain fiber 12 (see FIG. 1, which illustrates the formation of a splice between two fibers of different refractive index profiles in a manner that creates the attenuation) thus greatly decreasing the overall return loss of a given section of the fiber.

As mentioned above, grating structure 20 may be formed within gain fiber 12 such that the same grating pattern is repeated over and over along an extended portion of the fiber (e.g., the loss characteristic shown in FIG. 3 is repeated over sequential portions of the gain fiber), thus providing a "distributed" filtering function. Alternatively, grating structure 20 may comprise several different gratings, with the attenuation spectrum of each grating being slightly different. In either case, the cumulative effect is to provide the particular type of spectral filtering required for the desired output response from the EDFA (e.g., increase in operating bandwidth, uniform gain profile, and the like).

For example, a combination of a weak Bragg grating and a tilted grating may be used. Such a combination allows for the wavelength-dependent attenuation to be achieved with great accuracy, while also reducing the effect of core mode reflections within the fiber (where these reflections are known to degrade the amplifier's performance).

Various fabrication processes may be used to incorporate grating structure 20 within Er-doped gain fiber 12. For example, the grating structure may be written into gain fiber 12 as it is being drawn down from an optical fiber preform. Alternatively, grating structure 20 may be inscribed along a length of gain fiber 12 that is to be included within an EDFA required to exhibit a high level of PCE. Or grating structure 20 may be inscribed along a complete length of gain fiber on a spool-to-spool process. All of these fabrication processes are well-understood in the art and are applicable here. Additionally, it is possible to provide adjustments to the details of grating structure 20 (e.g., strength, period, etc.) in real time by monitoring the transmission properties of gain fiber 12 and modify the grating writing process as needed. Alternatively, amplifier properties such as gain, PCE and noise figure can be monitored during grating inscription, with real-time adjustments made to attain optimal performance. These adjustments may even include the formation of additional gratings (with different attenuation spectra) to achieve the desired results, and may differ depending on the intended application.

As mentioned above, there are many long-haul communication applications that benefit by eliminating the need to use discrete GFFs at the output of each amplifier (repeater) disposed along the transmission signal path. For example, in submarine transmission systems, the pump power for all of the included EDFAs is fed from a terminal station. If an amplifier can be designed without of the use of a discrete GFF at the output to flatten the amplifier's gain spectrum, the PCE of the amplifier is improved and the total transmission capacity of the cable can be increased.

Indeed, the capacity demand in submarine cable communication is expected to grow exponentially in the foreseeable future. One of the fundamental constraints in submarine optical fiber cable systems is the electrical powering of the EDFA repeaters, as mentioned above. This is because the electrical power is fed from remote, land-based terminal stations and as a result the electric potential across the cable and repeaters cannot exceed the maximum rating for this fixed-location "power feed equipment" (PFE), which is typically 15 kV. Therefore, being able to deploy high-PCE EDFA repeaters is very important.

Assuming the case where the total voltage drop across the cable is equal to the total voltage drop across all repeaters, the electrical power consumption for a given repeater may be expressed as:

$$P_{rep} = \frac{2N_{fp}P_{tot}}{(1-\varepsilon)\eta},$$

where $N_{fp}$ is the number of supported fiber pairs, $\varepsilon$ represents a fraction of the total repeater power for control circuitry not related to optical power conversion, and $\eta$ is the electrical-to-optical conversion efficiency of the amplifier. The $\eta$ factor includes elements such as driver efficiency, changes in current for pump ageing, pump conversion efficiency (from driver current to light output), the EDFA PCE as discussed above. Thus, any improvement in $\eta$ by increasing the EDFA PCE will result in lowering the power consumption at a given repeater. Alternatively, the improvement in $\eta$ allows for a larger $N_{fp}$ for the same $P_{rep}$ value.

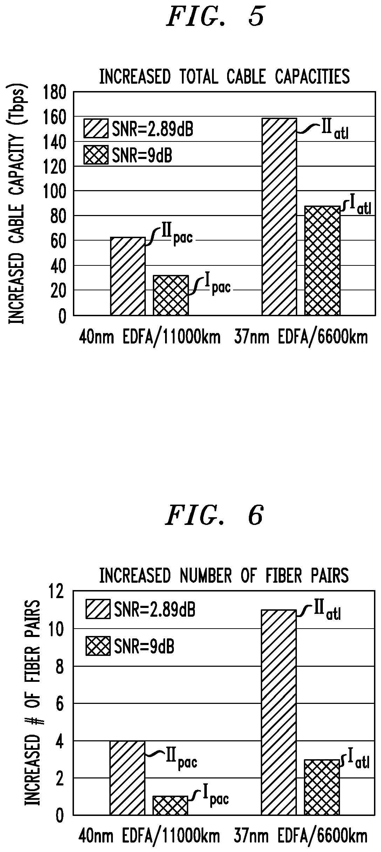

FIGs. 5 and 6 contain representations of additional capabilities of an EDFA incorporating distributed filtering in accordance with the present invention. FIG. 5 is a plot of the increase in total cable capacity of exemplary submarine cable systems including a typical transpacific system having a distance of 11,000 km and a transatlantic system having a distance of 6600 km. The transpacific system includes EDFAs exhibiting a bandwidth on the order of about 40 nm, while the EDFAs used in the transatlantic system have a slightly smaller bandwidth (of about 37 nm). Both of these systems utilize forward-directed pumping for their EDFAs, with the electrical energy required to energize the pump sources located at an input on-shore terminal (within fixed power feed equipment at that location). The DC voltage typically used is 15 kV, as discussed above.

With this background in mind, FIG. 5 contains bar graphs illustrating an increase in total cable capacity for both the transpacific (11,000 km) system and the transatlantic (6600 km) system that can be achieved by using distributed spectral filtering in accordance with the principles of the present invention. Bars I$_{pac}$ and I$_{atl}$ depict the increases in capacity available in distributed spectral filtering systems that are configured to optimize the launch signal power (typically a high signal-to-noise ratio (SNR) regime, e.g., SNR of about 9 dB). Bars $II_{pac}$ and $II_{atl}$ are associated with systems that are configured to operate in a low SNR regime (about 2.89 dB) and utilize a space-division multiplexing (SDM) scheme. The bar charts clearly show that a transatlantic system utilizing the distributed arrangement of the present invention provides an increase in capacity on the order of 150 Tb/s when operating in a low SNR regime (e.g., SNR of about 2.89 dB), which is optimized to maximize the total cable capacity using the SDM transmission approach. If operating in a higher SNR region (e.g., SNR of about 9 dB), an increase in capacity on the order of 80 Tb/s is achieved. The "low" and "high" SNR increases in capacity for the transpacific system are shown to be about 60 and 30 TB/s respectively. FIG. 6 is another way to view this same data, showing the increase in the number of fiber pairs that may be used within the transpacific and transatlantic cables.

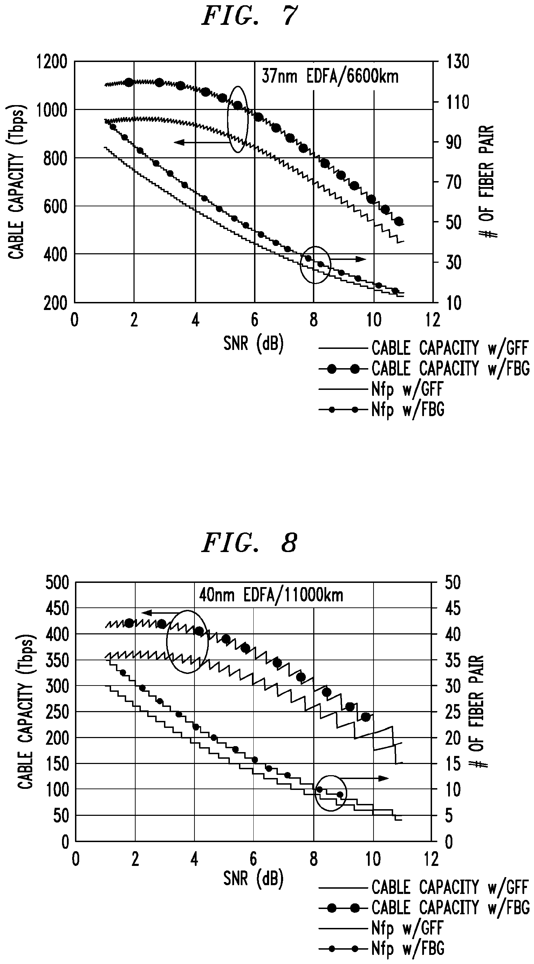

FIG. 7 contains plots of both total cable capacity and number of fiber pairs supported by an exemplary transatlantic system, again supported by a fixed cable voltage of 15 kV, used to energize the entire 6600 km span. The plots of FIG. 7 are associated with installing an EDFA "repeater" every 97.5 kms along the span, and contain results for both a prior art arrangement using discrete GFFs and EDFAs formed in accordance with the present invention to utilize distributed gain flattening filtering within the Er-doped gain fiber. Similar to the bar charts of FIGs. 5 and 6, the results shown in FIG. 7 also illustrates that the total capacity is increased by about 150 Tb/s at the low SNR regime, with the ability to include ten additional fiber pairs. FIG. 8 contains plots of both total cable capacity and number of fiber pairs for an exemplary transpacific system.

For applications such as these, it is contemplated that an additional discrete GFF may be used within a small subset of repeaters (for example, within every fourth repeater along the span). These additional GFFs can be thought of as "clean-up" filters used to reduce the impact of accumulated gain ripple along the span. Alternatively, a different, specialized grating structure 20A may be used at certain locations along the span, where the loss spectrum of the specialized grating is configured to perform this clean-up function.

While the principles of the invention have been described herein, it is to be understood by those skilled in the art that this description is made only by way of example and not as a limitation as to scope of the invention. Modifications and substitutions by one of ordinary skill in the art are considered to be within the scope of the present invention, which is not to be limited except by the following claims.

**Claims**

1. A rare-earth doped optical fiber amplifier (10) for providing optical signal amplification over a defined bandwidth of operation, the rare-earth doped optical fiber amplifier comprising

   a section of rare-earth doped optical fiber (12), fiber, the section of rare-earth doped optical fiber formed to include a continuous grating structure (20) inscribed therein, and incorporated along at least a majority thereof, including along an output termination section thereof to minimize the opportunity for additional gain variations to be generated prior to exiting the section of rare-earth doped optical fiber; and
   a source for providing a pump beam at a wavelength appropriate for creating gain for an optical signal propagating through the section of rare-earth doped optical fiber, creating as an output an amplified optical output signal, wherein the continuous grating structure is configured to provide distributed spectral filtering within the defined bandwidth of operation of the rare-earth doped optical fiber amplifier.

2. The rare-earth doped optical fiber amplifier as defined in claim 1 wherein the continuous grating structure comprises a tilted grating, with an angle of tilt and grating period selected to provide distributed gain-flattening across the defined bandwidth of operation.

3. The rare-earth doped optical fiber amplifier as defined in claim 2 wherein the continuous grating structure comprises a plurality of tilted gratings of like characteristics formed along the majority thereof and including an output termination section of rare-earth doped optical fiber.

4. The rare-earth doped optical fiber as defined in claim 2 wherein the continuous grating structure comprises a plurality of tilted gratings, where at least two tilted gratings exhibit a different wavelength-dependent loss profile across the defined bandwidth of operation.

5. The rare-earth doped optical fiber amplifier as defined in claim 1 wherein the continuous grating structure comprises a weak strength Bragg grating inscribed within a doped core region of the section of rare-earth doped optical fiber, wherein a difference in refractive index along the grating and grating period are selected to provide distributed spectral filtering across the defined bandwidth of operation.

6. The rare-earth doped optical fiber amplifier as defined in claim 5 wherein the continuous grating structure comprises a plurality of weak strength Bragg gratings of like characteristics formed the majority thereof and including an output termination section of rare-earth doped optical fiber.

7. The rare-earth doped optical fiber as defined in claim 5 wherein the continuous grating structure comprises a plurality of weak strength Bragg gratings, where at least two weak strength Bragg gratings exhibit a different wavelength-dependent loss profile across the defined bandwidth of operation.

8. The rare-earth doped optical fiber amplifier as defined in claim 1 wherein the continuous grating structure comprises a plurality of long-period gratings, LPGs, with characteristics configured to provide distributed spectral filtering within the defined bandwidth of operation of the rare-earth doped optical fiber amplifier.

9. The rare-earth doped optical fiber amplifier as defined in claim 1 wherein the continuous grating structure comprises one or more elements from the group consisting of: tilted gratings, weak strength Bragg gratings, and LPGs.

10. The rare-earth doped optical fiber amplifier as defined in claim 1 wherein the continuous grating structure is configured to exhibit a distributed spectral filtering response that increases an operating bandwidth beyond the defined bandwidth of operation.

11. The rare-earth doped optical fiber amplifier as defined in claim 1 wherein the continuous grating structure is configured to exhibit a distributed spectral filtering response that creates a predetermined gain profile across the defined bandwidth of operation.

12. The rare-earth doped optical fiber amplifier as defined in claim 11 wherein the predetermined gain profile comprises a gain-flattened profile.

13. The rare-earth doped optical fiber amplifier as defined in claim 1 wherein the section of rare-earth doped optical fiber comprises a section of erbium-doped optical fiber.

**Patentansprüche**

1. Verstärker (10) einer mit seltenen Erden dotierten optischen Faser zum Bereitstellen einer optischen Signalverstärkung über eine definierte Betriebsbandbreite, wobei der Verstärker einer mit seltenen Erden dotierten optischen Faser folgende Merkmale aufweist:

   einen Abschnitt einer mit seltenen Erden dotierten optischen Faser (12), wobei der Abschnitt einer mit seltenen Erden dotierten optischen Faser so gebildet ist, dass er eine kontinuierliche Gitterstruktur (20) aufweist, die darin eingeschrieben ist und entlang zumindest eines Großteils davon integriert ist, einschließlich entlang eines Ausgangsabschlussabschnitts davon, um die Möglichkeit zu minimieren, dass zusätzliche Gewinnvariationen erzeugt werden, bevor der Abschnitt einer mit seltenen Erden dotierten optischen Faser verlassen wird; und
   eine Quelle zum Bereitstellen eines Pumpstrahls mit einer Wellenlänge, die zum Erzeugen eines Gewinns für ein optisches Signal geeignet ist, das sich durch den Abschnitt einer mit seltenen Erden dotierten optischen Faser ausbreitet, wobei als eine Ausgabe ein verstärktes optisches Ausgangssignal erzeugt wird, wobei die kontinuierliche Gitterstruktur dazu konfiguriert ist, eine verteilte spektrale Filterung innerhalb der definierten Betriebsbandbreite des Verstärkers einer mit seltenen Erden dotierten optischen Faser bereitzustellen.

2. Verstärker einer mit seltenen Erden dotierten optischen Faser gemäß Anspruch 1, bei dem die kontinuierliche Gitterstruktur ein geneigtes Gitter aufweist, wobei ein Neigungswinkel und eine Gitterperiode ausgewählt sind, um eine verteilte Gewinnabflachung über die definierte Betriebsbandbreite bereitzustellen.

3. Verstärker einer mit seltenen Erden dotierten optischen Faser gemäß Anspruch 2, bei dem die kontinuierliche Gitterstruktur eine Mehrzahl von geneigten Gittern mit ähnlichen Charakteristika aufweist, die entlang des Großteils davon gebildet sind und einen Ausgangsabschlussabschnitt einer mit seltenen Erden dotierten optischen Faser aufweisen.

4. Verstärker einer mit seltenen Erden dotierten optischen Faser gemäß Anspruch 2, bei dem die kontinuierliche Gitterstruktur eine Mehrzahl von geneigten Gittern aufweist, wobei zumindest zwei geneigte Gitter ein unterschiedliches wellenlängenabhängiges Verlustprofil über die definierte Betriebsbandbreite aufweisen.

5. Verstärker einer mit seltenen Erden dotierten optischen Faser gemäß Anspruch 1, bei dem die kontinuierliche Gitterstruktur ein Schwachstärke-Bragg-Gitter aufweist, das in einen dotierten Kernbereich des Abschnitts einer mit seltenen Erden dotierten optischen Faser eingeschrieben ist, wobei ein Unterschied im Brechungsindex entlang des Gitters und eine Gitterperiode ausgewählt sind, um eine verteilte spektrale Filterung über die definierte Betriebsbandbreite bereitzustellen.

**6.** Verstärker einer mit seltenen Erden dotierten optischen Faser gemäß Anspruch 5, bei dem die kontinuierliche Gitterstruktur eine Mehrzahl von Schwachstärke-Bragg-Gittern mit ähnlichen Charakteristika aufweist, die den Großteil davon bilden und einen Ausgangsabschlussabschnitt einer mit seltenen Erden dotierten optischen Faser aufweisen.

**7.** Verstärker einer mit seltenen Erden dotierten optischen Faser gemäß Anspruch 5, bei dem die kontinuierliche Gitterstruktur eine Mehrzahl von Schwachstärke-Bragg-Gittern aufweist, wobei zumindest zwei Schwachstärke-Bragg-Gitter ein unterschiedliches wellenlängenabhängiges Verlustprofil über die definierte Betriebsbandbreite aufweisen.

**8.** Verstärker einer mit seltenen Erden dotierten optischen Faser gemäß Anspruch 1, bei dem die kontinuierliche Gitterstruktur eine Mehrzahl von Langperiodengittern, LPGs, mit Charakteristika aufweist, die dazu konfiguriert sind, eine verteilte spektrale Filterung innerhalb der definierten Betriebsbandbreite des Verstärkers einer mit seltenen Erden dotierten optischen Faser bereitzustellen.

**9.** Verstärker einer mit seltenen Erden dotierten optischen Faser gemäß Anspruch 1, bei dem die kontinuierliche Gitterstruktur ein oder mehr Elemente aus der Gruppe aufweist, die besteht aus: geneigten Gittern, Schwachstärke-Bragg-Gittern und LPGs.

**10.** Verstärker einer mit seltenen Erden dotierten optischen Faser gemäß Anspruch 1, bei dem die kontinuierliche Gitterstruktur dazu konfiguriert ist, eine verteilte spektrale Filterantwort aufzuweisen, die eine Betriebsbandbreite über die definierte Betriebsbandbreite hinaus erhöht.

**11.** Verstärker einer mit seltenen Erden dotierten optischen Faser gemäß Anspruch 1, bei dem die kontinuierliche Gitterstruktur dazu konfiguriert ist, eine verteilte spektrale Filterantwort aufzuweisen, die ein vorbestimmtes Gewinnprofil über die definierte Betriebsbandbreite erzeugt.

**12.** Verstärker einer mit seltenen Erden dotierten optischen Faser gemäß Anspruch 11, bei dem das vorbestimmte Gewinnprofil ein gewinnabgeflachtes Profil aufweist.

**13.** Verstärker einer mit seltenen Erden dotierten optischen Faser gemäß Anspruch 1, bei dem der Abschnitt einer mit seltenen Erden dotierten optischen Faser einen Abschnitt einer mit Erbium dotierten optischen Faser aufweist.

**Revendications**

**1.** Amplificateur à fibre optique dopée aux terres rares (10) destiné à fournir une amplification de signal optique sur une largeur de bande de fonctionnement définie, l'amplificateur à fibre optique dopée aux terres rares comprenant

un segment de fibre optique dopée aux terres rares (12), le segment de fibre optique dopée aux terres rares étant formé de manière à inclure une structure de réseau continue (20) y inscrite, et incorporée le long d'au moins une majorité de ce dernier, y compris le long d'un segment de terminaison de sortie de ce dernier de manière à minimiser la possibilité de générer des variations de gain additionnelles avant de sortir du segment de fibre optique dopée aux terres rares; et

une source destinée à fournir un faisceau de pompage à une longueur d'onde appropriée pour créer un gain pour un signal optique se propageant à travers le segment de fibre optique dopée aux terres rares, à créer comme sortie un signal de sortie optique amplifié, où la structure de réseau continue est configurée pour fournir un filtrage spectral distribué dans la largeur de bande de fonctionnement définie de l'amplificateur à fibre optique dopée aux terres rares.

**2.** Amplificateur à fibre optique dopée aux terres rares selon la revendication 1, dans lequel la structure de réseau continue comprend un réseau incliné, avec un angle d'inclinaison et une période de réseau sélectionnés pour fournir un aplanissement de gain distribué sur la largeur de bande de fonctionnement définie.

**3.** Amplificateur à fibre optique dopée aux terres rares selon la revendication 2, dans lequel la structure de réseau continue comprend une pluralité de réseaux inclinés de caractéristiques similaires formés le long de la majorité de cette dernière et comportant un segment de terminaison de sortie de fibre optique dopée aux terres rares.

**4.** Amplificateur à fibre optique dopée aux terres rares selon la revendication 2, dans lequel la structure de réseau continue comprend une pluralité de réseaux inclinés, où au moins deux réseaux inclinés présentent un profil de perte dépendant de la longueur d'onde différent sur la largeur de bande de fonctionnement définie.

**5.** Amplificateur à fibre optique dopée aux terres rares selon la revendication 1, dans lequel la structure de réseau continue comprend un réseau de Bragg de faible intensité inscrit dans une région de noyau dopée du segment de fibre optique dopée aux terres rares, dans lequel une différence d'indice de réfraction le long du réseau et la période de réseau sont sélectionnées pour fournir un filtrage spectral distribué sur la largeur de bande de fonctionnement définie.

6. Amplificateur à fibre optique dopée aux terres rares selon la revendication 5, dans lequel la structure de réseau continue comprend une pluralité de réseaux de Bragg de faible intensité de caractéristiques similaires formés dans la majorité de cette dernière et comportant un segment de terminaison de sortie de fibre optique dopée aux terres rares.

7. Amplificateur à fibre optique dopée aux terres rares selon la revendication 5, dans lequel la structure de réseau continue comprend une pluralité de réseaux de Bragg de faible intensité, dans lequel au moins deux réseaux de Bragg de faible intensité présentent un profil de perte dépendant de la longueur d'onde différent sur la largeur de bande de fonctionnement définie.

8. Amplificateur à fibre optique dopée aux terres rares selon la revendication 1, dans lequel la structure de réseau continue comprend une pluralité de réseaux de longue période, LPG, avec des caractéristiques configurées pour fournir un filtrage spectral distribué dans les limites de la largeur de bande de fonctionnement définie de l'amplificateur à fibre optique dopée aux terres rares.

9. Amplificateur à fibre optique dopée aux terres rares selon la revendication 1, dans lequel la structure de réseau continue comprend un ou plusieurs éléments du groupe constitué de: réseaux inclinés, de réseaux de Bragg à faible résistance et de LPG.

10. Amplificateur à fibre optique dopée aux terres rares selon la revendication 1, dans lequel la structure de réseau continue est configurée pour présenter une réponse de filtrage spectral distribué qui augmente une largeur de bande de fonctionnement au-delà de la largeur de bande de fonctionnement définie.

11. Amplificateur à fibre optique dopée aux terres rares selon la revendication 1, dans lequel la structure de réseau continue est configurée pour présenter une réponse de filtrage spectral distribué qui crée un profil de gain prédéterminé sur la largeur de bande de fonctionnement définie.

12. Amplificateur à fibre optique dopée aux terres rares selon la revendication 11, dans lequel le profil de gain prédéterminé comprend un profil à gain aplani.

13. Amplificateur à fibre optique dopée aux terres rares selon la revendication 1, dans lequel le segment de fibre optique dopée aux terres rares comprend un segment de fibre optique dopée à l'erbium.

*FIG. 1*

*FIG. 2*

## FIG. 3

LOSS (dB/W) vs WAVELENGTH (nm)

## FIG. 4

GAIN (dB) vs WAVELENGTH (nm)

A: w/o FBG, P540mW
B: w/o FBG, P540mW AFTER DISCRETE GFF
C: w FBG, P471mW

## FIG. 5

### INCREASED TOTAL CABLE CAPACITIES

## FIG. 6

### INCREASED NUMBER OF FIBER PAIRS

## FIG. 7

## FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62889819
- EP 0897124 A1
- EP 1150403 A1
- US 5260823 A
- US 5337382 A
- US 6141142 A
- JP 2001203415 A
- US 6392789 B1
- US 2002105720 A1
- US 2005191007 A1

### Non-patent literature cited in the description

- Gain flattening by long period gratings in erbium doped fibers. **SINGH RASHMI et al.** OPTICS COMMUNICATIONS. ELSEVIER, 14 July 2004, vol. 240, 123-132